# EUROPEAN PATENT SPECIFICATION

(11) **EP 0 628 250 B1**
(45) Date of publication and mention of the grant of the patent: **09.09.1998**
(21) Application number: 94304220.0
(22) Date of filing: 10.06.1994
(51) Int. Cl.: A21C 11/10, B26D 1/30

(54) **Cutting and shaping a food product**
Schneiden und Formen eines Nahrungsmittels
La coupe et la mise en forme d'un produit alimentaire

(30) Priority: 11.06.1993 JP 166105/93; 18.06.1993 JP 172737/93
(43) Date of publication of application: 14.12.1994
(73) Proprietor: RHEON AUTOMATIC MACHINERY CO. LTD., Utsunomiya-shi Tochigi-ken (JP)
(72) Inventor: Tashiro, Yasunori, Rheon Automatic Mach. Co., Ltd., Utsunomiya-shi, Tochigi-ken (JP)
(74) Representative: Leale, Robin George

(56) References cited:
- EP-A- 0 478 135
- US-A- 4 589 833

## Description

This invention relates to apparatus for cutting and shaping a food product consisting of a filling enclosed in a cover, such as a bean-jam bun. More especially, it relates to such an apparatus comprising a plurality of cutting and shaping members rotatably mounted on respective axes disposed on an imaginary circle so that, in operation, the said members open and close a central opening which they surround, thereby to cut and shape a bar-like dough body passing through the opening.

Our European Patents Nos. 230,368 and 430,396 disclose apparatuses for so cutting and shaping a bar-like body. However, these apparatuses have some drawbacks. Thus, when they have been used to continuously process dough for an extended time, because their cutting and shaping members slide on each other or swing around their axes to close and open the central opening, they may overheat and seize up, whereby operation is interrupted. Further, pieces of dough material or adhesion-preventing powders tend to gather at the tip regions of the cutting and shaping members during the cutting process. These unwanted residual materials or powders may cause problems by adhering to the members and the cut dough body, and may also cause protrusion of the filling through the cover. In addition, there are difficulties in producing a product with a smooth cover free from flower-like patterns or folds, which appear at its top as a result of small gaps being present between the cutting and shaping members when their tips come together at the centre of the opening.

EP-A-0 430 396 discloses apparatus for cutting and shaping a bar-shaped dough body, comprising three or more polyhedral members each having an axis of rotation, said members being rotatably mounted with their said axes of rotation equidistantly disposed on an imaginary circle, and each having upper and lower parallel planar surfaces between which the member has a predetermined thickness, and wherein the members form between themselves an opening that is closed and opened by the rotational movement of the members.

The present invention is characterised in that each said member comprises two opposite side surfaces, each of which is formed along an arc whose radius is equal to the rectilinear distance between two adjacent ones of said axes in said apparatus, and two tips at which the two side surfaces abut each other and which form cutting edges, the arrangement being such that when the tips of the polyhedral members are positioned at the centre of the said circle, each of the centres of the arcs that correspond to the two said side surfaces of the polyhedral member is located at a distance from the axis of the member that is equal to the radius of the said circle and at a distance from the centre of the circle that is equal to the said distance between two adjacent axes.

In one embodiment of the invention each of the said side surfaces is configured such that the surface on one side of each tip is convex about an axis orthogonal to the said axis of rotation, and the surface on the other side of the tip is concave. The degrees of the curvature of the convex and concave surfaces of the member preferably become sharper toward the tips.

In another embodiment the arrangement is such that when the tips are positioned at the centre of the circle each of the centres of the arcs that correspond to the side surfaces of the polyhedral members is located at a distance from the axis of its said member that is equal to the radius of the circle and at a distance from the centre of the circle that is equal to the distance between two adjacent axes.

In another embodiment, one tip portion of each member is cut away.

Viewed from another aspect the invention provides apparatus for cutting and shaping a bar-shaped dough body, comprising three identically-shaped polyhedral members, each said member being rotatably mounted to a respective one of three shafts that are equidistantly disposed on an imaginary circle such that the members radially and collectively open and close an opening concentric with the circle as they rotate; characterised in that each of the members has three sides arranged to form a tip between each pair of adjacent sides, each side being formed along an arc chose radius is equal to the rectilinear distance between two adjacent ones of the said shafts, and the arrangement being such that when the tip of one said member is positioned at the centre of the circle the centre of each of the arcs that correspond to the two sides that abut each other at that tip is located at a distance from the shaft of the said member that is equal to the radius of the circle and at a distance from the centre of the circle that is equal to the said distance between two adjacent shafts, and the centre of the arc corresponding to the remaining side is located at the centre of the circle, and wherein the said members are associated such that the opening is closed by the rotation of the members so that a bar-shaped dough body passing through the opening is cut and shaped.

Some embodiments of the invention will now be described by way of example and with reference to the accompanying drawings, in which:-
Fig. 1A is a plan view showing the shape of a first embodiment of a polyhedral member according to the invention;
Fig. 1B is a perspective view of the polyhedral member of Figure 1A;
Fig. 1C is a perspective view of a modified polyhedral member;
Figs. 2 to 4 are schematic views of an assembly of polyhedral members according to the invention, to show the nature of the cutting and shaping process;
Figs. 5A and 5B are partially-sectional views of two forms of apparatus incorporating the first embodiment of the polyhedral member and the aforementioned modification thereof, respectively;
Fig. 6A is a plan view showing the shape of a second embodiment of a polyhedral member;
Fig. 6B is a perspective view of the polyhedral member of this second embodiment;
Figs. 7 to 10 and 11 to 14 are schematic views to illustrate the nature of the cutting and shaping process using an assembly of members of the second embodiment; and
Figs. 15A, 15B, 16A and 16B show further embodiments of the invention.

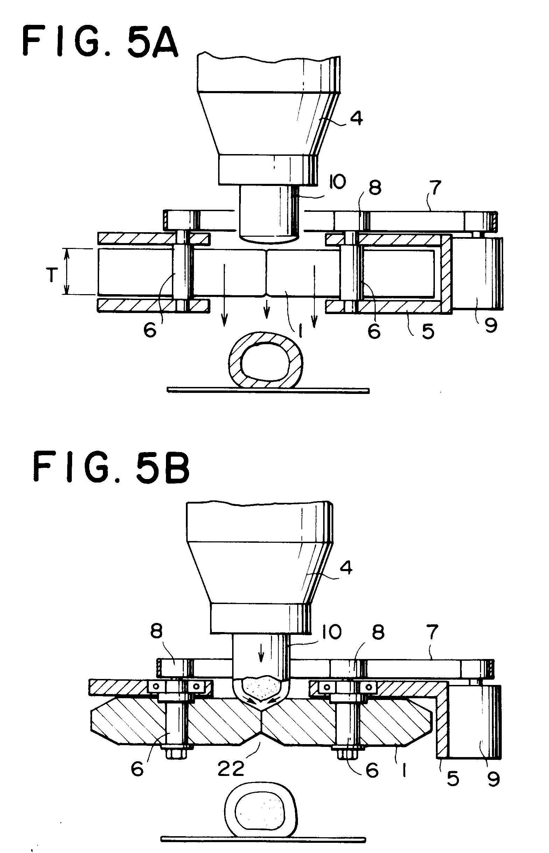

Referring now to Fig. 1A, four axes B for the location of shafts 6 (Figs. 5A and 5B) are equidistantly disposed on an imaginary circle a drawn with a radius R around a centre A. A polyhedral member 1 is fitted to a shaft positioned on each of the axes B, only one such member being shown in Fig. 1A.

A first side surface 11 and a second side surface 12 of the polyhedral member 1 are formed along arcs y1 and y2, respectively. The radius of each of the arcs y1 and y2 is equal to a distance a', which is also the rectilinear distance between each two adjacent axes B. The centre x1 of the arc y1 and the centre x2 of the arc y2 are each located at a distance from the axis B (of the member 1 in question) that is equal to the radius R and at a distance from the centre A that is equal to the distance a'.

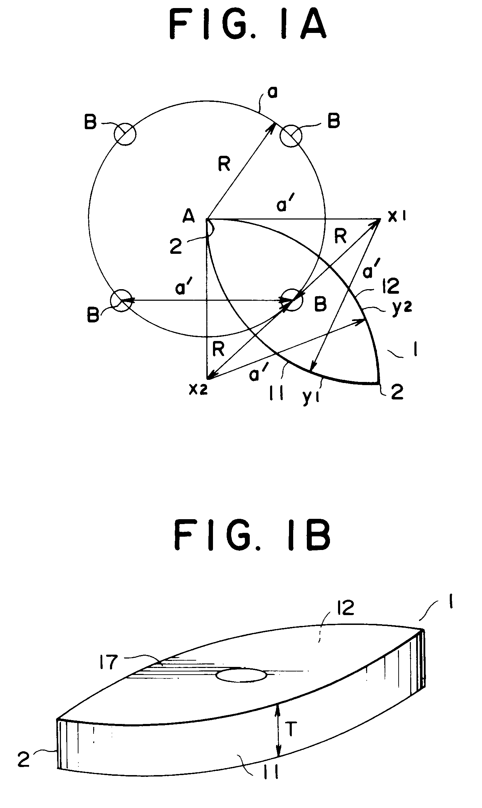

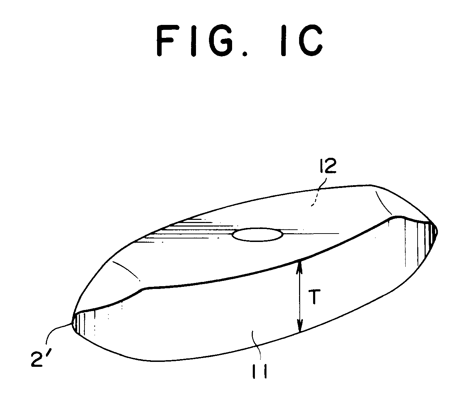

Referring now to Fig. 1B, the upper and lower surfaces 17 of the polyhedral member 1 are flat and parallel to each other, to provide the member with a thickness T. They abut each other at tips 2.

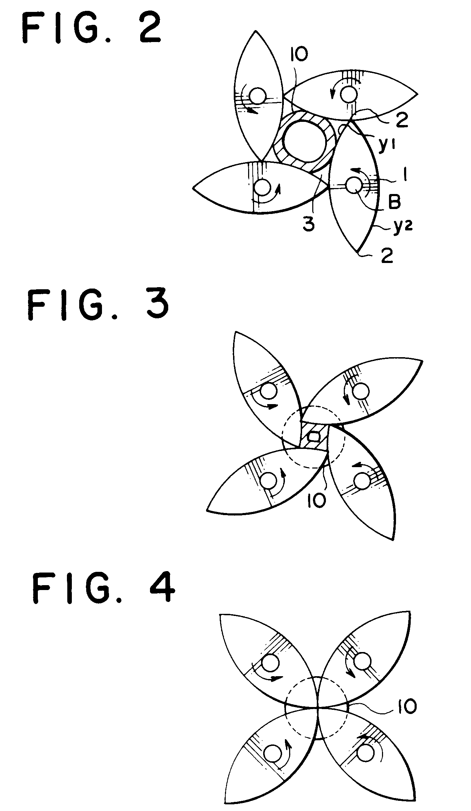

Side surfaces 11 and 12 and the tips 2 constitute the blade part of the member, that contacts, shapes, and cuts the material. When, as shown in Fig. 2, the member is rotated counterclockwise in use, the left hand side of the side surface 11 or 12, as viewed face on, serves as a blade.

Referring now to Figs. 2 to 4, four of the polyhedral members 1 are rotatably mounted on respective shafts so that a central opening 3 is alternately formed and closed when they all rotate continuously in one direction. The tips of the members abut each other at the centre A to divide the bar-shaped dough as the opening is closed. The direction of rotation, clockwise or counterclockwise, may be optionally selected.

The locus of movement of the tips 2, when the polyhedral member 1 rotates, is such that either of the two tips of each member tracks the first or second side 11,12 of an adjacent member, with no interference therebetween.

Referring to Fig. 5A, an example of a cutting and shaping apparatus embodying the invention will now be described. Such an apparatus, incorporating polyhedral members 1 according to the invention, is positioned under means 4 for supplying a double-layered dough bar 10. The means 4 can be of any known kind.

Four vertical shafts 6, equidistantly positioned on an imaginary circle, are rotatably mounted in a housing 5. Polyhedral members 1 are fitted to the respective shafts 6 so as to lie in a common plane. One end of each shaft 6 is connected to a respective timing pulley 8 which is driven by a timing belt 7 from a motor 9 mounted on the housing 5.

The housing 5 is arranged to be reciprocated up and down by suitable driving means (not shown) in synchronism with the rotation of the polyhedral members 1. The up and down movement of the housing is synchronized with the opening and closing of the opening 3 such that as the opening closes (as shown in Figs. 2 to 4) the housing simultaneously descends. The housing goes up, to return to its original position, when the opening is fully opened and there is no interference from the dough.

The functioning and effect of the first embodiment of the invention will now be explained with further reference to Figs. 2 to 4. Fig. 2 shows a cross section of a bar-shaped dough body 10 consisting of a filling enclosed in a dough coating. As the opening 3 closes, a side surface 11 or 12 of each polyhedral member 1 presses and moves the coating toward the centre. At this time a neck, having a reduced surface area, is formed on the coating between the upper and lower surfaces of the polyhedral members so that the bar-shaped dough can be cut without making the outer cover thinner, and without the filling protruding.

The amount of the dough that is moved by the side surface 11 or 12 toward the centre at this time can be adjusted by changing the thickness T of the particular part of the polyhedral member 1 that presses the dough. Thus, as shown in Fig. 1C, by providing polyhedral members whose thickness decreases toward their tips 2', as an alternative to providing polyhedral members with a constant thickness T (Fig. 1B), the cutting and shaping process can be adjusted in accordance with the particular properties of different dough materials, such as bread and cake dough.

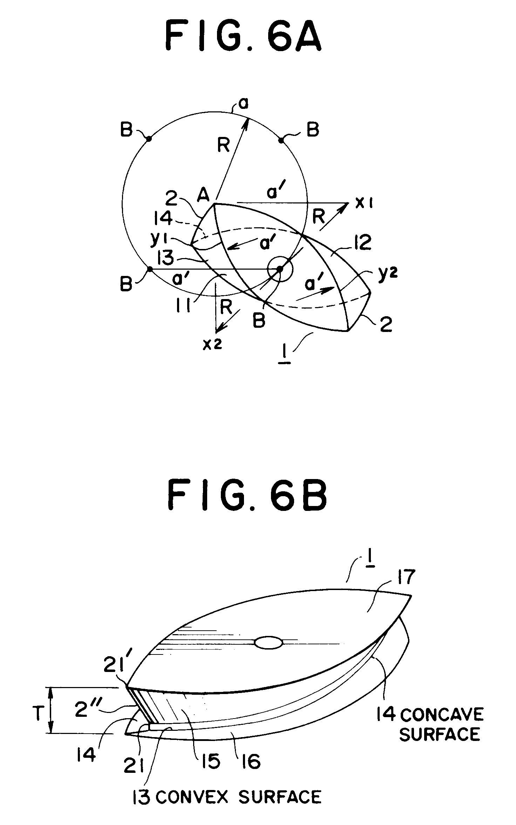

Referring now to Figs. 6A and 6B, these show the characteristic shape of a second embodiment of a polyhedral member according to the invention. The upper and lower surfaces 17 of the polyhedral member are formed just as in the first embodiment. The two side edges of each of these surfaces meet at two points 21'.

Each of the side surfaces 11,12 has a convex surface 13 and a concave surface 14, both formed along a direction perpendicular to the upper and lower surfaces. The convex surface 13 extends from midway between the two tips to one of the tips 2, and the concave surface extends symmetrically from the same midway point to the opposite tip.

As shown in Fig. 6B, tips 2 are defined where the convex and concave surfaces abut each other.

In this embodiment, the convex and concave surfaces project and recede towards the central part of the thickness T, respectively. The ridge formed between the part of the convex surface that projects the most and the part of the concave surface that recedes the most is represented by a vertical line 21. It forms one end of the convex and concave surfaces. The convex surface progressively protrudes from the edge of the top or bottom surface towards one tip. The concave surface progressively recedes from the edge of the top or bottom surface towards the other tip. As shown in Fig. 6A, the tip portions, viewed from above, show envelopes profiled by the points corresponding to the line 21 of the polyhedral member. The envelopes form unique loci of the members of this embodiment when the members are rotated about the shaft 6 or axis B.

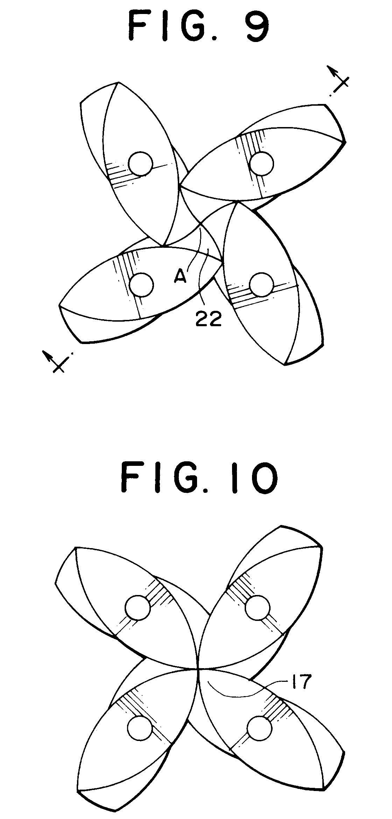

The hatched cross section of the polyhedral member 1 of Fig. 5B shows a cross section cut along the line indicated by the arrows shown in Fig. 9.

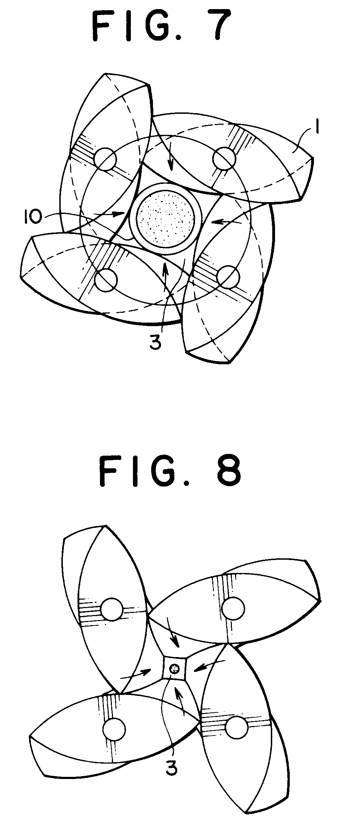

As shown in Figs. 7 and 8, the opening 3 is closed as follows: 1) as the polyhedral members 1 rotate in a direction indicated by the arrows, the opening 3 becomes gradually smaller, 2) soon the leading ends of the convex surfaces 21 (Fig. 6B) of the tips 2'' collect at the centre A so that the opening disappears (Fig. 9), 3) and at this time recesses 22 (Figs. 5B and 9), surrounded by the slopes 15,16 of the convex surfaces 13, appear around the centre A on each of the upper and lower surfaces of the members.

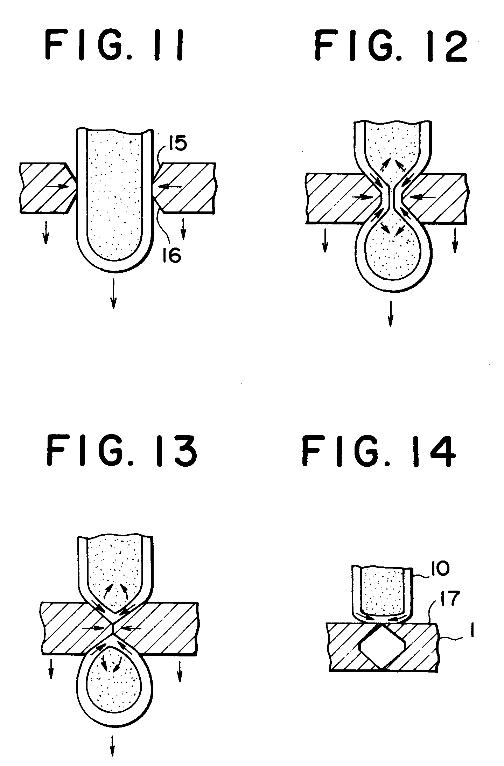

As shown in Figs. 10 and 14, when the members continue rotating, the recesses 22 disappear and the upper and lower surfaces of all the polyhedral members meet at points 21' (Fig. 6B).

This continuous closing process, containing a phase wherein the recesses 22 appear and a phase wherein the upper and lower surfaces 17 replace the recesses, is a feature of this embodiment. It forcedly induces the coating material to move to the top and bottom parts of the product to be cut so that even very elastic dough can be effectively processed.

As shown in Fig. 6B, the degree of projection of the convex surfaces and the degree of recession of the concave surfaces increase toward the tip 2 so that slopes 16,17 increasingly incline toward a horizontal plane. This means that when the convex surfaces 13 penetrate the bar-shaped dough body, the slopes 15,16 effectively induce the dough coating to move to the central part. In other words, as shown in Figs. 11 to 14, as the slopes 15,16 incline toward the horizontal with the penetration of the convex surfaces 13, the dough in an area where it contacts the slopes moves toward the central part, and by so doing the top and bottom parts of the product to be cut can be smoothed while the dough coating moves towards the central part.

Finally, the closing state shown in Fig. 14 completes the cutting and shaping operation.

The amount of the dough coating that is moved at this time by the side surface 11 or 12 towards the centre can be adjusted by changing the degree of projection or recession of the convex and concave surfaces 13,14, and also by changing the thickness T of the whole, or only the tip portions, of each polyhedral member.

In this cutting and shaping process, generally the chosen thickness T of each polyhedral member 1 depends on the properties of the dough to be processed. The thickness of the member is preferably the same as or less than the diameter of a dough bar to be cut. As a result, dough can be cut and shaped without making the cover too thin or having it broken.

Since the tip 2 of each polyhedral member 1 tracks the side surface 11 or 12 of the adjacent member, and scrapes off any material sticking thereto, even a very sticky, soft material can be cut and shaped without any adhesion.

In one embodiment of the invention, four polyhedral members are used to cut the dough twice for each revolution thereof. However, the number and the shapes of the polyhedral members are not limited to this embodiment.

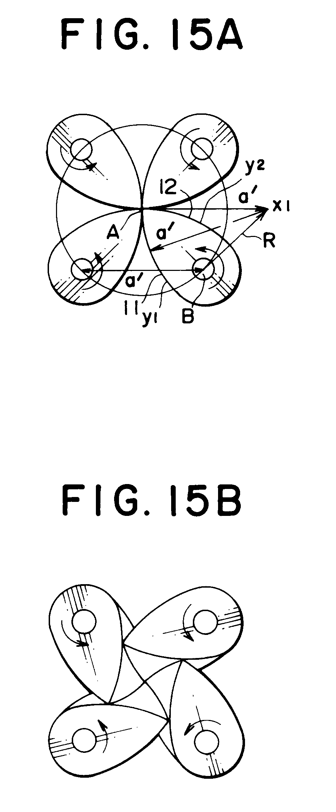

Figs. 15A and 15B show another embodiment of assembled polyhedral members of this invention, in which four polyhedral members of a different shape are used. Since one of the tip portions of each polyhedral member is omitted, the assembly cuts dough only once per revolution.

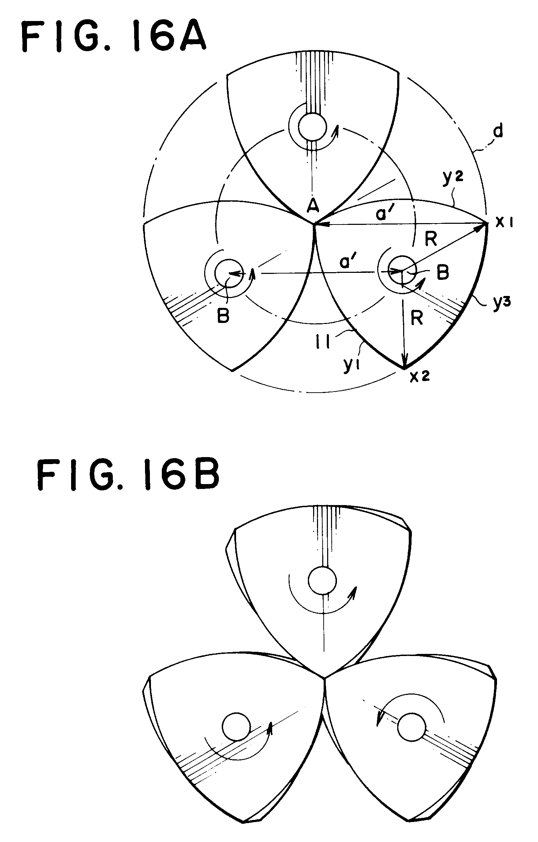

Figs. 16A and 16B show further embodiments of the assembled polyhedral members, wherein three members of another different shape are used. In this case the assembly cuts dough three times per revolution. In this embodiment each of the members has three side surfaces forming a tip between each two adjacent sides, and the envelope of each side surfaces is defined by an arc whose radius is equal to the distance between two adjacent shafts.

Five or more polyhedral members may also be equidistantly disposed on a circle to cut and shape a bar-shaped dough body, according to the properties of the dough or the required operating conditions.

Thus, the number of dough products cut and shaped per revolution and the size of a product to be cut and shaped can be arranged by providing assemblies consisting of different numbers of polyhedral members with different numbers of sides.

As is explained above, apparatus according to this invention can cut and shape a completely enveloped product to produce a cover of a substantially constant thickness and without the filling protruding. These effects are due to the manner in which the tips of the polyhedral members track the side surfaces of adjacent members while continuously rotating in one direction, and in which the convex surfaces formed on the side surfaces, whose degree of projection increases toward the tip, penetrate the bar-shaped dough to cut and shape a spherical body in a continuous operation containing two phases of cutting so that even a very elastic coating material is adequately induced to move to the central part.

Due to this arrangement no residual dough pieces or adhesion-preventing powders are left around the central portion of the collected polyhedral members. Thus any problem caused thereby, such as sticking or clogging, is avoided. Also, even a very sticky material can be cut and shaped without any impediment due to adhesion.

The quantity of the products produced can be changed freely by changing the number of polyhedral members and of their side surfaces.

In addition, the revolving structure of this invention, differing from that of conventional devices, enables the members to be continuously operated for a long time without causing any seizing up of the cutting and shaping members.

It will thus be seen that the present invention, at least in its preferred forms, provides a simple and durable apparatus for cutting and shaping a bar-shaped dough body, that can continuously operate for a long time without its cutting and shaping members seizing up; and furthermore provides an improved member for cutting and shaping a bar-shaped dough body that substantially eliminates dough adhesion and filling protrusions caused by material gathering in the regions of the cutting and shaping members near the opening; and furthermore provides an improved apparatus that can precisely and neatly produce a spherical dough product without generating any substantial irregularities on the surface of the product.

## Claims

1. Apparatus for cutting and shaping a bar-shaped dough body (10), comprising three or more polyhedral members (1) each having an axis of rotation (B), said members being rotatably mounted with their said axes of rotation equidistantly disposed on an imaginary circle (a), and each having upper and lower parallel planar surfaces (17) between which the member has a predetermined thickness (T), and wherein the members form between themselves an opening (3) that is closed and opened by the rotational movement of the members; characterised in that each said member comprises two opposite side surfaces (11,12), each of which is formed along an arc (y1,y2) whose radius is equal to the rectilinear distance (a') between two adjacent ones of said axes (B) in said apparatus, and two tips (2) at which the two side surfaces abut each other and which form cutting edges, the arrangement being such that when the tips of the polyhedral members are positioned at the centre of the said circle, each of the centres (x1,x2) of the arcs that correspond to the two said side surfaces of the polyhedral member is located at a distance from the axis of the member that is equal to the radius (R) of the said circle and at a distance from the centre of the circle that is equal to the said distance (a') between two adjacent axes.

2. Apparatus as claimed in claim 1, wherein each of the said side surfaces (11,12) is configured such that the surface on one side of each tip is convex (13) about an axis orthogonal to the said axis of rotation (B), and the surface on the other side of the tip is concave (14).

3. Apparatus as claimed in claim 2, wherein the degree of projection of the said convex surface (13) and of recession of the said concave surface (14) both become sharper toward each tip.

4. Apparatus as claimed in any of claims 1 to 3, wherein one tip portion (21) of the polyhedral member is cut away.

5. Apparatus as claimed in any of claims 1 to 4, wherein the said polyhedral members are associated so that as they rotate they radially and collectively open and close an opening (3) concentric with the said circle (a), a tip portion (2) of each polyhedral member tracking the side surface (11,12) of an adjacent polyhedral member, and wherein the said opening is confined through the side surfaces of the polyhedral members by the rotary movement thereof so that a bar-shaped dough body (10) passing through the opening is cut and shaped.

6. Apparatus for cutting and shaping a bar-shaped dough body (10), comprising three identically-shaped polyhedral members (1), each said member being rotatably mounted to a respective one of three shafts (6) that are equidistantly disposed on an imaginary circle (a) such that the members radially and collectively open and close an opening (3) concentric with the circle as they rotate; characterised in that each of the members has three sides arranged to form a tip between each pair of adjacent sides, each side being formed along an arc (y1,y2,y3) whose radius is equal to the rectilinear distance (a') between two adjacent ones of the said shafts, and the arrangement being such that when the tip of one said member is positioned at the centre of the circle the centre of each of the arcs (x1,x2) that correspond to the two sides that abut each other at that tip is located at a distance from the shaft of the said member that is equal to the radius (R) of the circle and at a distance from the centre of the circle that is equal to the said distance between two adjacent shafts, and the centre of the arc corresponding to the remaining side is located at the centre of the circle, and wherein the said members are associated such that the opening is closed by the rotation of the members so that a bar-shaped dough body passing through the opening is cut and shaped.

7. Apparatus as claimed in claim 6, wherein each of the said sides has convex and concave surfaces (13,14) complementary to each other, the convex surface projecting horizontally outwardly from the side and extending from midway between two of the tips of the member to one of such tips, the concave surface receding horizontally inwardly from the side and extending from midway between two said tips of the member to the other of such tips.

## Patentansprüche

1. Vorrichtung zum schneiden und Formen eines stangenförmigen Teigkörpers (10), umfassend drei oder mehr polyhedrale Teile (1), deren jeder eine Drehachse (B) hat und die drehbar angebracht sind, wobei ihre genannten Drehachsen in gleichen Abständen auf einem imaginären Kreis (a) angeordnet sind, jeder dieser Teile eine obere und eine untere parallele ebene Fläche (17) hat, zwischen denen der Teil eine vorbestimmte Dicke (T) hat, und wobei die Teile zwischen sich eine Öffnung (3) bilden, die durch die Drehbewegung der Teile geschlossen und geöffnet wird,
dadurch **gekennzeichnet,** daß jeder dieser Teile zwei gegenüberliegende Seitenflächen (11,12), deren jede entlang eines Bogens (y1, y2) gebildet ist, dessen Radius gleich dem geradlinigen Abstand (a') zwischen zwei benachbarten der genannten Achsen (B) in der Vorrichtung ist, und zwei Spitzen (2) aufweist, an denen die beiden Seitenflächen zusammenstoßen und die Schneidkanten bilden, wobei die Ausführung derart getroffen ist, daß, wenn die Spitzen der polyhedralen Teile an dem Zentrum des genannten Kreises liegen, jedes der Zentren (x1, x2) der Bögen, die den beiden genannten Seitenflächen des polyhedralen Teils entsprechen, in einem Abstand von der Achse des Teils, der gleich dem Radius (R) des genannten Kreises ist, und in einem Abstand von dem Zentrum des Kreises liegt, der gleich dem genannten Abstand (a') zwischen zwei benachbarten Achsen ist.

2. Vorrichtung nach Anspruch 1, in welcher jede der genannten Seitenflächen (11,12) derart gestaltet ist, daß die Fläche auf einer Seite jeder Spitze um eine Achse orthogonal zu der genannten Drehachse (B) konvex (13), und die Fläche auf der anderen Seite der Spitze konkav (14) ist.

3. Vorrichtung nach Anspruch 2, in welcher das Ausmaß des Vorragens der genannten konvexen Fläche (13) und der Vertiefung der genannten konkaven Fläche (14) beide in Richtung gegen jede Spitze schärfer bzw. deutlicher wird.

4. Vorrichtung nach irgendeinem der Ansprüche 1 bis 3, in welcher ein Spitzenteil (21) des polyhedralen Teils weggeschnitten ist.

5. Vorrichtung nach irgendeinem der Ansprüche 1 bis 4, in welcher die polyhedralen Teile derart zugeordnet sind, daß, wenn sie sich drehen, sie radial und kollektiv eine Öffnung (3) konzentrisch zu dem genannten Kreis (a) öffnen und schließen, ein Spitzenteil (2) jedes polyhedralen Teils der Seitenfläche (11,12) eines benachbarten polyhedralen Teils folgt und in welcher die genannte Öffnung über die Seitenflächen der polyhedralen Teile durch deren Drehbewegung begrenzt ist, so daß ein stangenförmiger Teigkörper (10), der durch die Öffnung hindurchgeht, geschnitten und geformt wird.

6. Vorrichtung zum Schneiden und Formen eines stangenförmigen Teigkörpers (10), umfassend drei identisch gestaltete polyhedrale Teile (1), deren jeder an einer betreffenden von drei Wellen (6) drehbar angebracht ist, die auf einem imaginären Kreis (a) in gleichen Abständen angeordnet sind derart, daß die Teile, wenn sie sich drehen, eine zu dem Kreis konzentrische Öffnung (3) radial und kollektiv öffnen und schließen, dadurch gekennzeichnet, daß jeder der Teile drei Seiten hat, die so ausgeführt sind, daß eine Spitze zwischen jedem Paar von benachbarten Seiten gebildet ist, jede Seite entlang eines Bogens (y1, y2, y3) gebildet ist, dessen Radius gleich dem geradlinigen Abstand (a') zwischen zwei benachbarten der genannten Wellen ist, und die Ausführung derart getroffen ist, daß, wenn die Spitze eines der Teile an dem Zentrum des Kreises liegt, das Zentrum jedes der Bögen (x1, x2), die den beiden Seiten entsprechen, die an der Spitze zusammenstoßen, in einem Abstand von der Welle des genannten Teils, der gleich dem Radius (R) des Kreises ist, und in einem Abstand von dem Zentrum des Kreises liegt, der gleich dem genannten Abstand zwischen zwei benachbarten Wellen ist, und das Zentrum des Bogens, der der verbleibenden Seite entspricht, an dem Zentrum des Kreises liegt, und in welcher die genannten Teile derart zugeordnet sind, daß die Öffnung durch die Drehung der Teile geschlossen wird, so daß ein stangenförmiger Teigkörper, der durch die Öffnung hindurchgeht, geschnitten und geformt wird.

7. Vorrichtung nach Anspruch 6, in welcher jede der Seiten konvexe und konkave Flächen (13, 14) hat, die zueinander komplementär sind, die konvexe Fläche von der Seite horizontal nach außen vorragt und sich von der Mitte zwischen zwei der Spitzen des Teils zu einer dieser Spitzen erstreckt, und die konkave Fläche von der Seite horizontal nach innen zurückspringt und sich von der Mitte zwischen zwei der genannten Spitzen des Teils zu der anderen dieser Spitzen erstreckt.

## Revendications

1. Appareil pour couper et mettre en forme un corps de pâte en forme de barre (10), comprenant trois éléments polyèdres ou davantage (1) dont chacun a un axe de rotation (B), lesdits éléments étant montés rotatifs en ayant leurs dits axes de rotation disposés à des distances égales sur un cercle imaginaire (a) et chacun ayant des surfaces supérieure et inférieure planes et parallèles (17) entre lesquelles l'élément a une épaisseur prédéterminée (T) et dans lequel les éléments forment entre eux-mêmes une ouverture (3) qui est fermée et ouverte par le mouvement de rotation des éléments ; caractérisé en ce que chacun desdits éléments comprend deux surfaces latérales opposées (11, 12) dont chacune est formée le long d'un arc (y1, y2) dont le rayon est égal à la distance rectiligne (a') comprise entre deux voisins desdits axes (B) à l'intérieur dudit appareil, et deux bouts (2) sur lesquels les deux surfaces latérales se rencontrent et qui forment des bords de coupe, la disposition étant telle que lorsque les bouts des éléments polyèdres sont positionnés au centre dudit cercle, chacun des centres (x1, x2) des arcs qui correspondent auxdites deux surfaces latérales de l'élément polyèdre soit placé à une distance de l'axe de l'élément qui est égale au rayon (R) dudit cercle et à une distance du centre du cercle qui est égale à ladite distance (a') comprise entre deux axes voisins.

2. Appareil selon la revendication 1, dans lequel chacune desdites surfaces latérales (11, 12) est conformée de manière qu'une surface située sur un côté de chaque bout soit convexe (13) autour d'un axe perpendiculaire audit axe de rotation (B) et que la surface située sur l'autre côté du bout soit concave (14).

3. Appareil selon la revendication 2, dans lequel le degré de saillie de ladite surface convexe (13) et celui de retrait de ladite surface concave (14) deviennent tous deux plus marqués vers chaque bout.

4. Appareil selon l'une quelconque des revendications 1 à 3, dans lequel une partie de bout (21) de l'élément polyèdre est enlevée par découpe.

5. Appareil selon l'une quelconque des revendications 1 à 4, dans lequel lesdits éléments polyèdres sont associés de manière que lorsqu'ils tournent, ils ouvrent et ferment radialement et ensemble une ouverture (3) concentrique audit cercle (a), une partie de bout (2) de chaque élément polyèdre suivant la surface latérale (11, 12) d'un élément polyèdre voisin et dans lequel ladite ouverture est confinée par les surfaces latérales des éléments polyèdres par leur mouvement de rotation de manière qu'un corps de pâte en forme de barre (10) passant par le trou soit coupé et mis en forme.

6. Appareil pour couper et mettre en forme un corps de pâte en forme de barre (10), comprenant trois éléments polyèdres (1) de forme identique, chacun desdits éléments étant monté rotatif sur l'un, respectif, de trois arbres (6) qui sont disposés à des distances égales sur un cercle imaginaire (a) de façon que les éléments ouvrent et ferment radialement et ensemble une ouverture (3) concentrique audit cercle lorsqu'ils tournent ; caractérisé en ce que chacune desdits éléments comprend trois côtés agencés de manière à former un bout entre chaque groupe de deux côtés voisins, chaque côté étant formé le long d'un arc (y1, y2, y3) dont le rayon est égal à la distance rectiligne (a') comprise entre deux, voisins, desdits arbres et la disposition étant telle que lorsque le bout de l'un desdits éléments est positionné au centre du cercle, le centre de chacun des arcs (x1, x2) qui correspondent aux deux côtés qui se rencontrent à ce bout soit placé à une distance de l'arbre dudit élément qui est égale au rayon (R) du cercle et à une distance du centre du cercle qui est égale à ladite distance comprise entre deux arbres voisins et que le centre de l'arc correspondant au côté restant soit placé au centre du cercle et dans lequel lesdits éléments sont associés de manière que l'ouverture soit fermée par la rotation des éléments de manière qu'un corps de pâte en forme de barre passant par le trou soit coupé et mis en forme.

7. Appareil selon la revendication 6, dans lequel chacun desdits côtés a des surfaces concave et convexe (13, 14) qui sont complémentaires l'une de l'autre, la surface convexe étant saillante horizontalement vers l'extérieur du côté et allant du milieu entre deux des bouts de l'élément à l'un de ces bouts, la surface concave étant horizontalement en retrait vers l'intérieur dudit côté et allant du milieu entre lesdits deux bouts de l'élément à l'autre de ces bouts.
